# EUROPEAN PATENT APPLICATION

(11) **EP 4 749 052 A1**
(43) Date of publication of application: **27.05.2026**
(21) Application number: 24843210.6
(22) Date of filing: 19.07.2024
(51) Int. Cl.: E04F 13/08, E04B 1/00, E06B 5/00, E06B 7/28, H02S 20/22, H02S 20/26, H02S 30/10

(54) **METHOD FOR MOUNTING SOLAR CELL MODULE, METHOD FOR REMOVING SOLAR CELL MODULE, BUILDING-MATERIAL-INTEGRATED SOLAR CELL MODULE, AND PHOTOVOLTAIC POWER GENERATION SYSTEM**

(30) Priority: 19.07.2023 JP 2023117678
(71) Applicant: Panasonic Intellectual Property Management Co., Ltd., Kadoma-shi, Osaka 571-0057 (JP)
(72) Inventor: UCHIDA, Ryusuke, Osaka 571-0057 (JP); HIGUCHI, Hiroshi, Osaka 571-0057 (JP)
(74) Representative: Appelt, Christian W.
(86) International application number: PCT/JP2024/026021
(87) International publication number: WO 2025/018422

(57) **Abstract**

A method for mounting a solar cell module onto a vertical building-material frame, the solar cell module having a photovoltaic layer containing a perovskite compound disposed on a substrate, includes, with the solar cell module having a first mounting member attached to at least one of upper and lower ends of the solar cell module, attaching a second mounting member to at least one of upper and lower portions of the building-material frame, attaching a wire storage section to the second mounting member, and coupling the first mounting member to the second mounting member, and, within the wire storage section, connecting a first lead wire of the solar cell module to a first main wire and connecting a second lead wire of the solar cell module to a second main wire.

## Description

### TECHNICAL FIELD

The present disclosure relates to a method for mounting a solar cell module, a method for removing a solar cell module, a building-integrated solar cell module, and a photovoltaic power generation system.

### BACKGROUND ART

The conventional mainstream of photovoltaic power generation systems is, for example, building-attached photovoltaics (BAPV), which generates power from sunlight by arranging photovoltaic power generation panels on the rooftop of a building.

In recent years, building-integrated photovoltaics (BIPV), which also function as a building material of a building, have been adopted in some buildings. For example, in Patent Document 1, a thin-film solar cell module is arranged inside the wall of a building, and the solar cell module is a part of the wall material.

### PRIOR ART DOCUMENT

### PATENT DOCUMENT

Patent Document 1 JP2015-194072A

### SUMMARY OF INVENTION

### TECHNICAL PROBLEM

However, when a solar cell module is a part of a building material, the building material must also be replaced when the solar cell module is replaced. In particular, in the case where plural solar cell modules are electrically connected together for use, if one solar cell module is not replaced when it becomes defective or breaks down, the efficiency of the entire solar cell may decrease.

The present disclosure provides a method for installing a solar cell module, a method for removing a solar cell module, a building-integrated solar cell module removably mountable to a building-material frame, and a photovoltaic power generation system, which allow for easy installation and removal of the solar cell module.

### MEANS FOR SOLVING PROBLEM

A method for mounting a solar cell module of the present disclosure is a solar cell module mounting method for mounting on a vertical building-material frame a solar cell module having a photovoltaic layer containing a perovskite compound disposed on a substrate. The solar cell module has a first mounting member attached to at least one of upper and lower ends of the solar cell module. In the solar cell module mounting method: a second mounting member is attached to at least one of upper and lower portions of the building-material frame; a wire storage section is attached to the second mounting member; and the first mounting member is coupled to the second mounting member, and, within the wire storage section, a first lead wire of the solar cell module is connected to a first main wire, and a second lead wire of the solar cell module is connected to a second main wire.

A method for removing a solar cell module of the present disclosure is a method for removing a solar cell module having a photovoltaic layer containing a perovskite compound disposed on a substrate. The solar cell module has a first mounting member attached to one end of the solar cell module, with a second mounting member being attached to an upper or lower portion of a building-material frame, and with a wire storage section and the first mounting member being attached to the second mounting member. In the solar cell module removing method, a first lead wire of the solar cell module is disconnected from a first main wire and a second lead wire of the solar cell module is disconnected from a second main wire within the wire storage section, and then the first mounting member is detached from the second mounting member.

A building-integrated solar cell module of the present disclosure comprises: a solar cell module having a photovoltaic layer containing a perovskite compound disposed on a substrate; a first mounting member attached to one end of the solar cell module; a second mounting member attached to an upper or lower portion of a building-material frame; and a wire storage section removably attachable to the second mounting member and extending along the first mounting member. The first mounting member and the second mounting member are detachably coupled to each other.

A photovoltaic power generation system of the present disclosure comprises: a plurality of the building-integrated solar cell modules described above; a first main wire connected to a positive electrode; and a second main wire connected to a negative electrode. The solar cell module comprises: a first lead wire connected to the first main wire via a connector; and a second lead wire connected to the second main wire via a connector. The plurality of solar cell modules are connected in parallel to the first and second main wires.

### ADVANTAGEOUS EFFECT OF INVENTION

According to the method for mounting a solar cell module, the method for removing a solar cell module, the building-integrated solar cell module removably mountable to a building-material frame, and the photovoltaic power generation system, the building-integrated solar cell module can be easily mounted or dismounted.

### BRIEF DESCRIPTION OF DRAWINGS

Fig. 1 is a partial external view of a building having a photovoltaic power generation system according to a first embodiment of the present disclosure.
Fig. 2 is an external view of a building-integrated solar cell module.
Fig. 3 is a system configuration diagram of the photovoltaic power generation system.
Fig. 4 is a front view of the building-integrated solar cell module.
Fig. 5 is a side view of the building-integrated solar cell module.
Fig. 6 is an exploded side view of the building-integrated solar cell module.
Fig. 7 is a schematic front view of a solar cell module.
Fig. 8 is a schematic cross-sectional view of the solar cell module of Fig. 7 taken along line II-II.
Fig. 9 is a schematic exploded perspective view of the solar cell module of Fig. 7.
Fig. 10 is a schematic front view of one submodule in the solar cell module of Fig. 7.
Fig. 11 is an enlarged front view of a part of the submodule of Fig. 10.
Fig. 12 is an enlarged cross-sectional view taken along line VIA-VIA in Fig. 11.
Fig. 13 is an enlarged cross-sectional view taken along line VIB-VIB in Fig. 11.
Fig. 14 is an explanatory diagram illustrating the connection between bus wires and lead wires of the solar cell module.
Fig. 15 is an explanatory diagram illustrating the attachment and detachment of a connector.
Fig. 16 is a flowchart showing a procedure for mounting a building-integrated solar cell module.
Fig. 17 is a process diagram showing a process of mounting the building-integrated solar cell module.
Fig. 18 is a process diagram showing the process of mounting the building-integrated solar cell module.
Fig. 19 is a flowchart showing a procedure for removing the building-integrated solar cell module.
Fig. 20 is a side view of a building-integrated solar cell module according to a variant.
Fig. 21 is a side view of a building-integrated solar cell module according to a variant.
Fig. 22 is a side view of a building-integrated solar cell module according to a variant.
Fig. 23 is a side view of a building-integrated solar cell module according to a variant.
Fig. 24 is a side view of a building-integrated solar cell module according to a variant.
Fig. 25 is a front view of two building-integrated solar cell modules arranged side by side.
Fig. 26 is an explanatory diagram illustrating the connection between bus wires and lead wires of the solar cell module, according to a variant.

### DESCRIPTION OF EMBODIMENTS

### (Findings Obtained by the Inventors of the Present Application)

The service life of building-integrated solar cell modules is short compared to the lifespan of a building, and if one solar cell module becomes defective or breaks down, the efficiency of the solar cell system having plural solar cell modules decreases, and as a countermeasure, the solar cell module must be replaced. Specific consideration was required regarding the replacement of building-integrated solar cell modules that are actually mounted vertically, such as on window frames or verandas.

Specifically, it is necessary to reduce the load generated during wiring of solar cell modules and mounting work on solar cell elements. Perovskite solar cells, which have been developed in recent years as solar cell elements, are thin films and are affected by air, so that the load on the solar cell module must be taken into consideration.

Furthermore, when building-integrated solar cell modules becoming larger and heavier are mounted vertically, mounting and wiring work becomes unstable, resulting in worsened workability on balconies or near windows and risks increasing as buildings become taller.

Thus, we propose a method for mounting a building-integrated solar cell module that allows for vertical mounting, and a building-integrated solar cell module.

Specifically, both ends of the solar cell module are fixed with first and third mounting members, and are detachably fixed to second and fourth mounting members disposed on the building.

This allows the solar cell module to be attached to the second and fourth mounting members fixed to the building while being structurally protected by the first and third mounting members.

The solar cell module mounting method enables the solar cell module to be mounted simply by bringing the solar cell module having the first and third mounting members into abutment against and fixing it to the second and fourth mounting members disposed on the building-material frame from inside the balcony. Moreover, since the bus wire is stored in the wire storage section, workability is improved.

In addition, building specifications are diverse, and when mounting solar cell modules, modules of different sizes and shapes need to be mounted. This can be achieved by changing the shape and dimensions of the second and fourth mounting members.

Furthermore, even if the dimensions of the solar cell module differ, the dimensions of the solar cell module to which the first and third mounting members are attached can be maintained by adjusting the fitting length with the recesses of the first and third mounting members, making it easy to replace solar cell modules of different dimensions.

### (Embodiment)

Hereinafter, this embodiment will be described with reference to the drawings. In this embodiment, a solar cell module is attached as a part of the building material of a building 3 as an example.

Currently, the useful life of buildings 3 has improved dramatically, and some buildings 3 can last for 100 years. In contrast, it is recommended that solar cell modules be replaced approximately every 10 to 20 years, and if a solar cell module is included as a part of a building material, such building material also needs to be replaced every 20 years at the longest. Therefore, this disclosure describes a building-integrated solar cell module that can be easily replaced. In this disclosure, the direction toward the outside of a building is referred to as the outside, the direction toward the inside of a building is referred to as the inside, and the direction from inside to outside is also referred to as the depth direction.

### [1. Configuration of Photovoltaic Power Generation System]

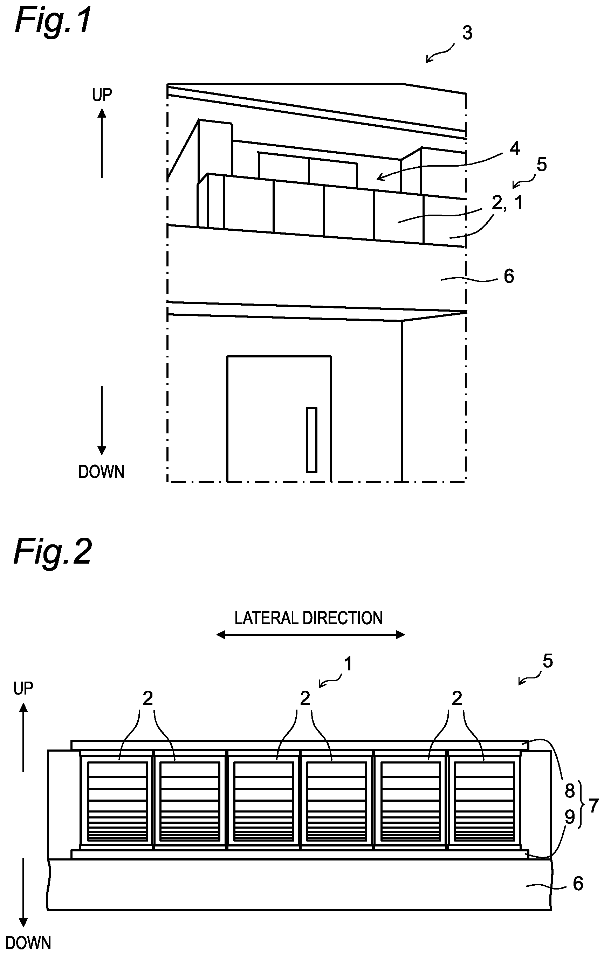

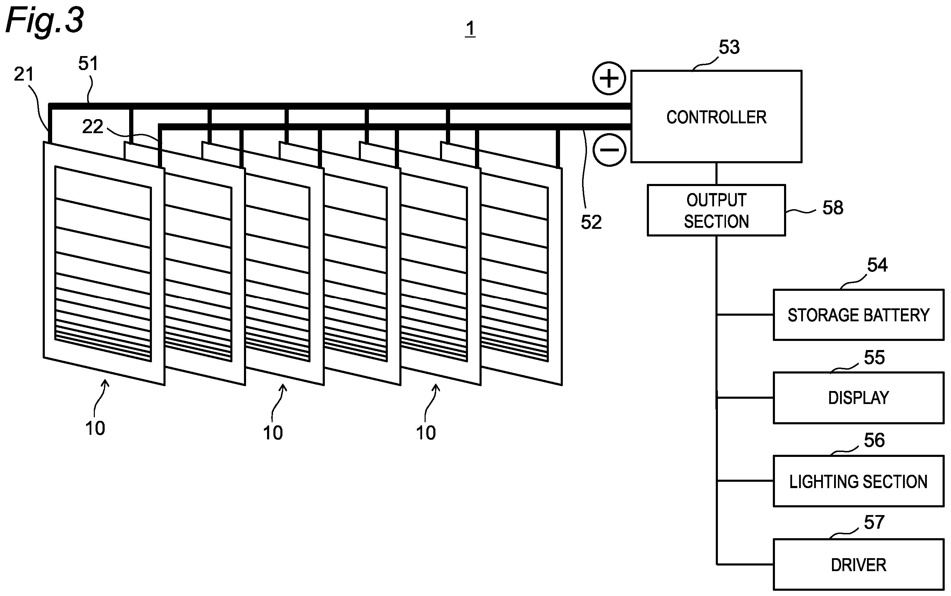

Reference is made to Figs. 1 to 3. Fig. 1 is a partial external view of the building 3 having a photovoltaic power generation system 1. Fig. 2 is an external view of a building-integrated solar cell module 2. Fig. 3 is a system configuration diagram of the photovoltaic power generation system 1.

As shown in Fig. 1, the building 3 having the photovoltaic power generation system 1 is, for example, a house or a building. In this embodiment, the building 3 will be described as a house. The building-integrated solar cell module 2 functions as, for example, a window or wall of the building 3. In this embodiment, the building-integrated solar cell module 2 is arranged as a part of a balcony wall 5 of a balcony 4 and functions as a wall material. In this embodiment, the balcony 4 is arranged on the second floor, and the balcony wall 5 is arranged on the upper part of an exterior wall 6 between the first and second floors, but this is not limited to this. The balcony may be arranged on the first floor, or if the building 3 is an apartment building or other multi-family dwelling, it may be arranged on each floor. The building-integrated solar cell module 2 may also be arranged as a part of a balcony wall.

As shown in Fig. 2, the balcony wall 5 includes a balcony frame 7 and a building-integrated solar cell module 2.

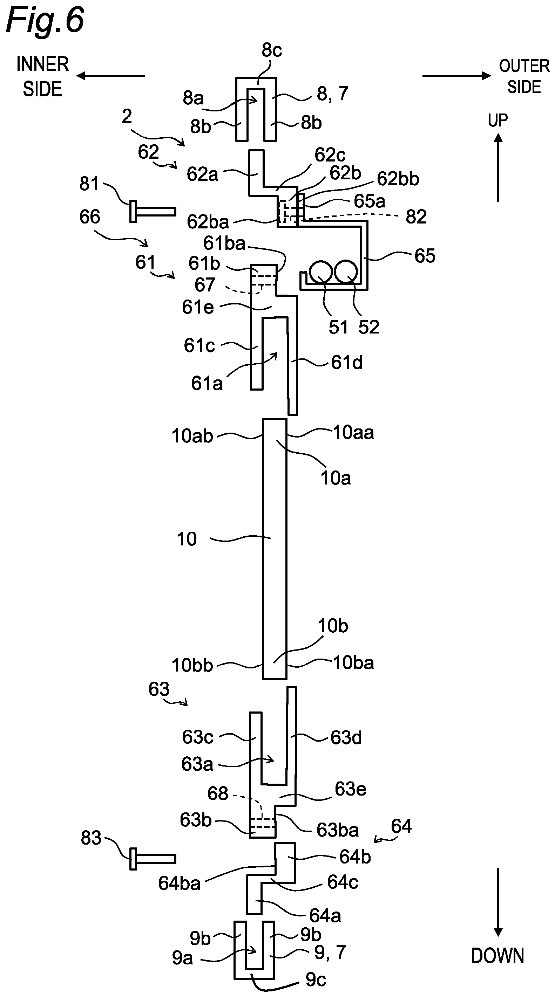

The balcony frame 7 supports the building-integrated solar cell modules 2. The balcony frame 7 includes an upper frame 8 that supports the upper portions of the building-integrated solar cell modules 2 and a lower frame 9 that supports the lower portions of the building-integrated solar cell modules 2. For example, six building-integrated solar cell modules 2 are attached to the balcony frame 7. The upper frame 8 of the balcony frame 7 also functions as a balcony handrail. As shown in Fig. 6, the upper frame 8 includes a pair of flat plate portions 8b that are substantially parallel to and face each other in the vertical direction, extending laterally, a flat plate portion 8c that connects the upper ends of the flat plate portions 8b and extends laterally, and a groove portion 8a surrounded by the flat plate portions 8b, 8c. The lower frame 9 includes a pair of flat plate portions 9b that are substantially parallel to and face each other in the vertical direction, extending laterally, a flat plate portion 9c that connects the lower ends of the flat plate portions 9b and extends laterally, and a groove portion 9a surrounded by the flat plate portions 9b, 9c.

Reference is made to Fig. 3. The photovoltaic power generation system 1 includes a solar cell module 10 included in each of the plurality of building-integrated solar cell modules 2, bus wires 51, 52, a controller 53, and an output section 58. The photovoltaic power generation system 1 further includes at least one of a storage battery 54, a display 55, a lighting section 56, and a driver 57, and the output section 58 is connected to at least one of the storage battery 54, the display 55, the lighting section 56, and the driver 57. The output section 58 is, for example, a distribution board.

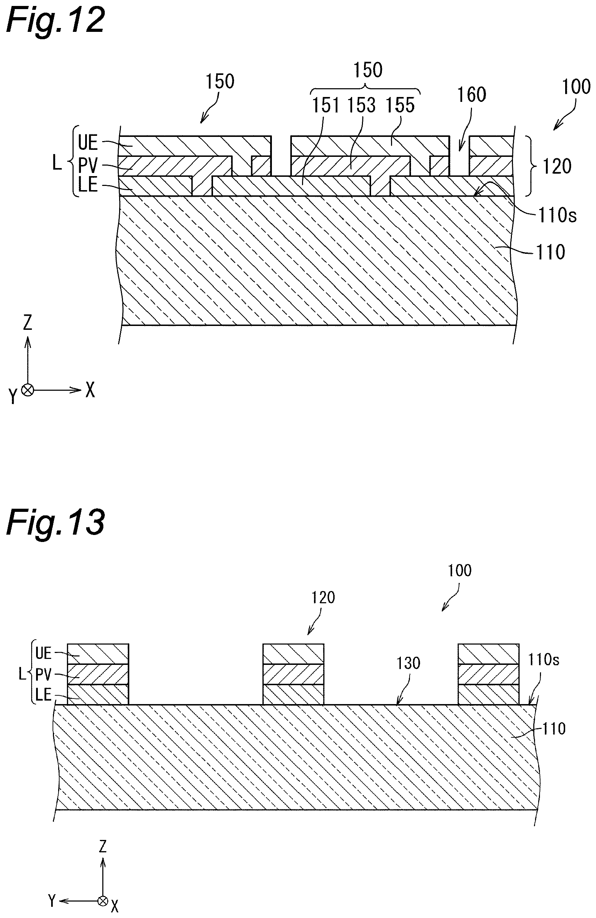

The solar cell module 10 converts sunlight into electrical energy. A lead wire 21 extending from the positive electrode of each solar cell module 10 is connected to the bus wire 51, and a lead wire 22 extending from the negative electrode of each solar cell module 10 is connected to the bus wire 52. Plural solar cell modules 10 are connected in parallel to the bus wires 51, 52. The sum of the currents flowing from each solar cell module 10 is input to the controller 53. When the solar cell module 10 contains a perovskite compound in its photovoltaic layer PV (see Fig. 12), the voltage generated is higher than that of other solar cells. Connecting the solar cell modules 10 in parallel prevents the voltage input to the controller 53 from becoming too high. Furthermore, connecting the solar cell modules 10 in parallel allows the power generated by the remaining solar cell modules 10 to be obtained even if one of the solar cell modules 10 is damaged and no longer able to generate power. Furthermore, the solar cell modules 10 can be replaced individually. Furthermore, for design reasons, some of the six building-integrated solar cell modules 2 can be made of glass plates that do not contain solar cell modules 10. Although the above-mentioned effects can be obtained by connecting a plurality of solar cell modules 10 in parallel in this way, they may also be connected in series.

The controller 53 includes an integrated circuit that can be implemented by semiconductor elements or the like, and a power conditioner, and converts the power converted by the solar cell module 10 into power that can be used by the storage battery 54, the display 55, the lighting section 56, and the driver 57. The converted power is supplied to the storage battery 54, the display 55, the lighting section 56, and the driver 57 via an output section 58.

The storage battery 54 stores excess power that cannot be used by the display 55, the lighting section 56, and the driver 57. The storage battery 54 supplies the stored power to the display 55, the lighting section 56, and the driver 57 at night or on rainy days when the solar cell module 10 cannot generate power.

The display 55 displays an image using the supplied power. The display 55 is, for example, a television, a monitor, or a projector.

The lighting section 56 emits light using the supplied power, and is, for example, an LED light or a fluorescent lamp.

The driver 57 uses the supplied power to drive a motor or the like. The driver 57 is, for example, a washing machine, an air conditioner, a refrigerator, etc. In this way, the power generated in each solar cell module 10 is stored or consumed.

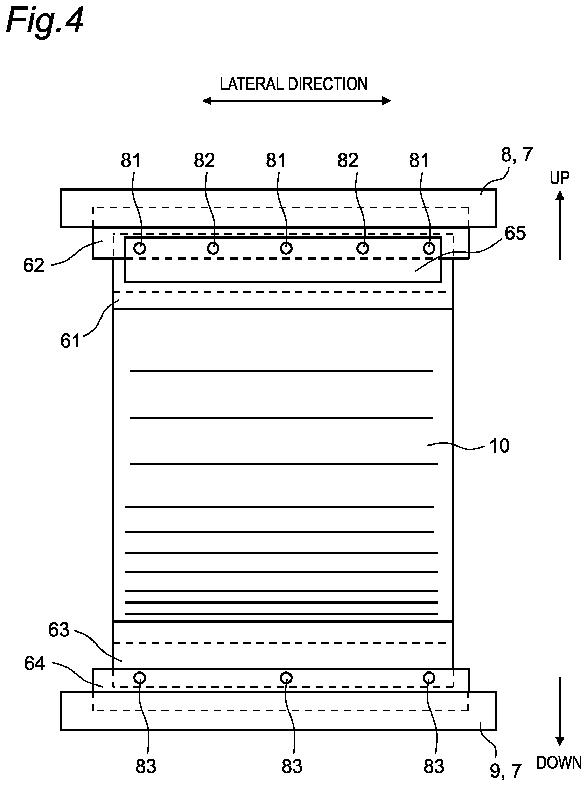

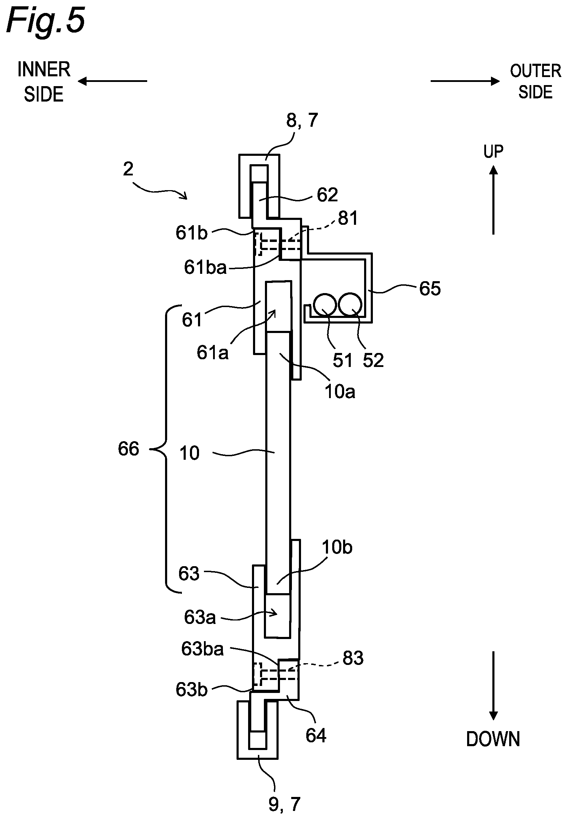

Next, reference is made to Figs. 4 to 6. Fig. 4 is a front view of the building-integrated solar cell module 2. Fig. 5 is a side view of the building-integrated solar cell module 2. Fig. 6 is an exploded side view of the building-integrated solar cell module 2.

The building-integrated solar cell module 2 comprises the solar cell module 10, a first mounting member 61, a second mounting member 62, a third mounting member 63, a fourth mounting member 64, and a wire storage section 65.

One vertical end 10a (first mounting portion) of the solar cell module 10 is fixed to the first mounting member 61, and the other vertical end 10b is fixed to the third mounting member 63. Here, when the solar cell module 10 is arranged vertically, the first mounting member 61 is located above the solar cell module 10, and the third mounting member 63 is located below the solar cell module 10.

The first mounting member 61 and the third mounting member 63 are attachments that support the attachment of the solar cell module 10 to the second mounting member 62 and the fourth mounting member 64, respectively, which are attached to the balcony frame 7, and are formed, for example, by bending sheet metal. They also reinforce the solar cell module 10. A building-material power generation module 66 is constructed by mounting the first mounting member 61 and the third mounting member 63 to the solar cell module 10.

The first mounting member 61 has a recess 61a on its lower side for receiving one end 10a of the solar cell module 10, and a protrusion 61b on its upper side. The first mounting member 61 includes flat plate portions 61c, 61d that are substantially parallel to and face each other in the vertical direction, extending laterally, and a flat plate portion 61e that connects the upper ends of the flat plate portions 61c, 61d and extends laterally. The protrusion 61b extends upward from the flat plate portion 61c side of the flat plate portion 61e, and the flat plate portion 61e and the protrusion 61b form an L-shaped cross section. The outer flat plate portion 61d extends closer to the center of the solar cell module 10, downward in this case, than the inner flat plate portion 61c. The protrusion 61b has a flat mounting surface 61ba extending laterally outward, and a threaded hole 67 that opens to a part of the mounting surface 61ba and penetrates the protrusion 61b in the depth direction. The threaded hole 67 is an elongated hole that extends vertically, and allows the vertical position of the first mounting member 61 relative to the second mounting member 62 to be adjusted.

The third mounting member 63 has the recess 61a on its upper side for receiving the other end 10b of the solar cell module 10, and a protrusion 63b protruding downward. The third mounting member 63 includes flat plate portions 63c, 63d that are substantially parallel to and face each other in the vertical direction, extending laterally, and a flat plate portion 63e that connects the lower ends of the flat plate portions 63c, 63d and extends laterally. The flat plate portion 63c side of the flat plate portion 63e extends downward, and the flat plate portion 63e and the protrusion 63b form an inverted L-shaped cross section. The outer flat plate portion 63d extends closer to the center of the solar cell module 10, in this case, upward, than the inner flat plate portion 63c. The protrusion 63b has a flat mounting surface 63ba extending laterally outward, and a threaded hole 68 that opens into a part of the mounting surface 63ba and penetrates the protrusion 63b in the depth direction. The threaded hole 68 is an elongated hole that extends vertically, and allows the vertical position of the third mounting member 63 relative to the fourth mounting member 64 to be adjusted.

The first mounting member 61 grips and fixes a first surface (outer surface) 10aa and a second surface (inner surface) 10ab of the upper end 10a of the solar cell module 10 over the entire width direction. The third mounting member 63 grips and fixes a first surface (outer surface) 10ba and a second surface (inner surface) 10bb of the lower end 10b of the solar cell module 10 over the entire width direction. The first mounting member 61 and the third mounting member 63 of this embodiment are adhesively fixed to the first surfaces 10aa, 10ba and the second surfaces 10ab, 10bb of the ends 10a, 10b of the solar cell module 10, respectively, using double-sided tape or an adhesive, for example.

In this embodiment, the first mounting member 61 and the third mounting member 63 each have a space between them and the ends 10a, 10b of the solar cell module 10, but they may be in tight contact with each other or may be filled with a caulking agent. When the space is defined between the first mounting member 61 and the third mounting member 63, on one side, and the ends 10a, 10b of the solar cell module 10, on the other, the vertical length of this space is 5 mm or more and 2 cm or less. By providing this space, even if the vertical dimensions of the solar cell module 10 vary slightly, this space can absorb the dimensional difference.

The second mounting member 62 and the fourth mounting member 64 are each an attachment that supports the mounting of the building-material power generation module 66 to the balcony frame 7, and are formed, for example, by bending sheet metal.

The second mounting member 62 has a first flat plate portion 62a, a second flat plate portion 62b, and a third flat plate portion 62c. The first flat plate portion 62a, which is substantially parallel to the vertical direction and extends laterally, is inserted into and fixed to the groove portion 8a disposed in the upper frame 8 of the balcony frame 7. The first flat plate portion 62a is fixed to the groove portion 8a with adhesive, caulking, or a fastening member such as a screw. The second flat plate portion 62b is substantially parallel to the vertical direction and extends laterally. The third flat plate portion 62c is substantially parallel to the horizontal direction and extends laterally. The inner end of the third flat plate portion 62c is connected to the lower end of the first flat plate portion 62a, and the outer end of the third flat plate portion 62c is connected to the upper end of the second flat plate portion 62b.

The second flat plate portion 62b is fixed to the mounting surface 61ba of the first mounting member 61. In this embodiment, an inner surface 62ba of the second flat plate portion 62b and the mounting surface 61ba of the first mounting member 61 are brought into abutment against each other, and the first mounting member 61 is fixed to the second mounting member 62 by fastening members 81 that pass through the threaded holes 67. An outer surface 62bb of the second flat plate portion 62b of the second mounting member 62 is brought into abutment against a mounting plate 65a of the wire storage section 65, and the wire storage section 65 is fixed to the second mounting member 62 by fastening members 82. These fastening members 81, 82 are, for example, screws or bolts and nuts.

The wire storage section 65 is rectangular with one side facing the building 3 (inside) open, allowing the bus wires 51, 52 to be stored from the balcony 4 side of the building 3. The wire storage section 65 has the mounting plate 65a that extends upwardly. The wire storage section 65 protrudes away from the first mounting member 61 and has a space inside. In this embodiment, the wire storage section 65 has a box-like shape that protrudes outward, forming a space surrounded by plates. The bus wires 51, 52 are stored within the wire storage section 65, and the bus wires 51, 52 are placed on the bottom surface of the wire storage section 65. The bus wires 51, 52 may be stored in a vertically overlapping manner within the wire storage section 65. In this case, protrusion of the wire storage section 65 can be suppressed. Because the wire storage section 65 is located outside the building-material power generation module 66, it is possible to prevent residents from accidentally coming into contact with the bus wires 51, 52.

The fourth mounting member 64 has a fourth flat plate portion 64a, a fifth flat plate portion 64b, and a sixth flat plate portion 64c. The fourth flat plate portion 64a, which is substantially parallel to the vertical direction and extends laterally, is inserted into and fixed to the groove portion 9a disposed in the lower frame 9 of the balcony frame 7. The fourth flat plate portion 64a is fixed to the groove portion 9a with adhesive, caulking, or a fastening member such as a screw. The fifth flat plate portion 64b is substantially parallel to the vertical direction and extends laterally. The sixth flat plate portion 64c is substantially parallel to the horizontal direction and extends laterally. The inner end of the sixth flat plate portion 64c is connected to the upper end of the fourth flat plate portion 64a, and the outer end of the sixth flat plate portion 64c is connected to the lower end of the fifth flat plate portion 64b.

The fifth flat plate portion 64b is fixed to the mounting surface 63ba of the third mounting member 63. In this embodiment, the inner surface 64ba of the fifth flat plate portion 64b and the mounting surface 63ba of the third mounting member 63 are brought into abutment against each other and fixed together by fastening members 83 that pass through the threaded holes 68. The fastening members 83 are, for example, screws or bolts and nuts.

The first mounting member 61, the second mounting member 62, the third mounting member 63, and the fourth mounting member 64 may each be a single continuous member or may be divided.

In this way, the solar cell module 10 is attached to the balcony frame 7, which is a vertical building-material frame. In this embodiment, the balcony frame 7 is not inclined relative to the vertical direction, but the vertical building-material frame to which the solar cell module 10 is attached may have an inclination in the range of 0 degrees to 40 degrees, both inclusive, relative to the vertical direction.

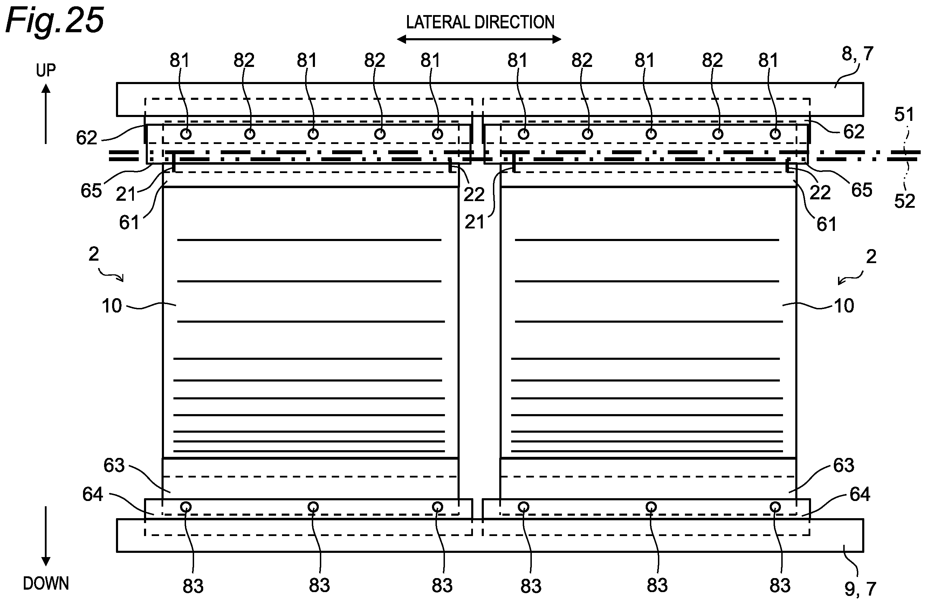

Reference is made to Fig. 25. Fig. 25 is a front view of two building-integrated solar cell modules 2 arranged side by side. When the solar cell modules 10 are arranged side by side and attached to the balcony frame 7, the height of the wire storage section 65 of each building-integrated solar cell module 2 is also the same height, so that each wire storage section 65 forms a single tunnel-shaped wire storage section. This makes it easy to route the bus wires 51, 52 to each wire storage section 65.

In addition, since the solar cell modules 10 are fixed in the vertical direction but not at their lateral ends, it is possible to improve the arrangement density of the solar cell modules 10 and increase the amount of power generation. Furthermore, since they are not fixed in the lateral direction, the weight of the building-integrated solar cell module 2 can be reduced.

Furthermore, since there is a gap between adjacent wire storage sections 65, the work of connecting the lead wire 21 to the bus wire 51 and the work of connecting the lead wire 22 to the bus wire 52 can be easily performed.

### [2. Configuration of Solar Cell Module]

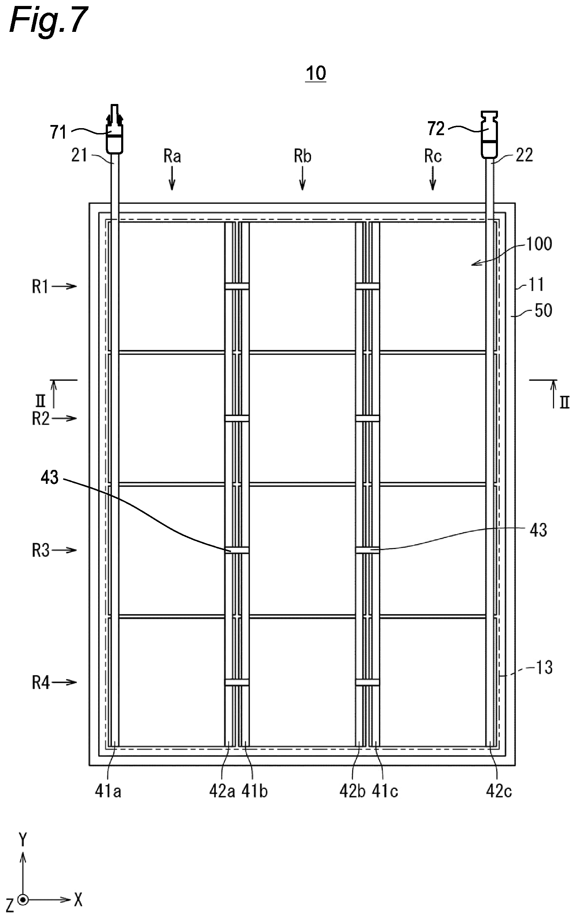

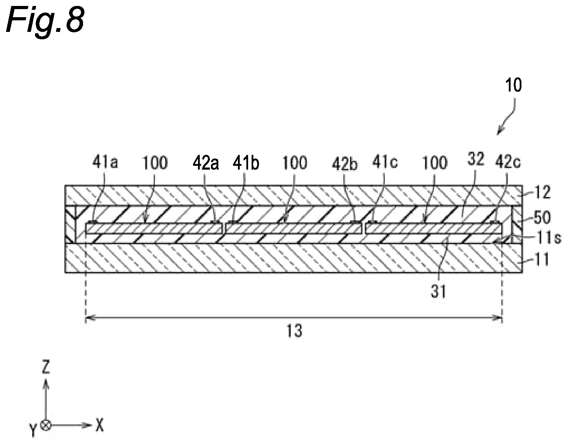

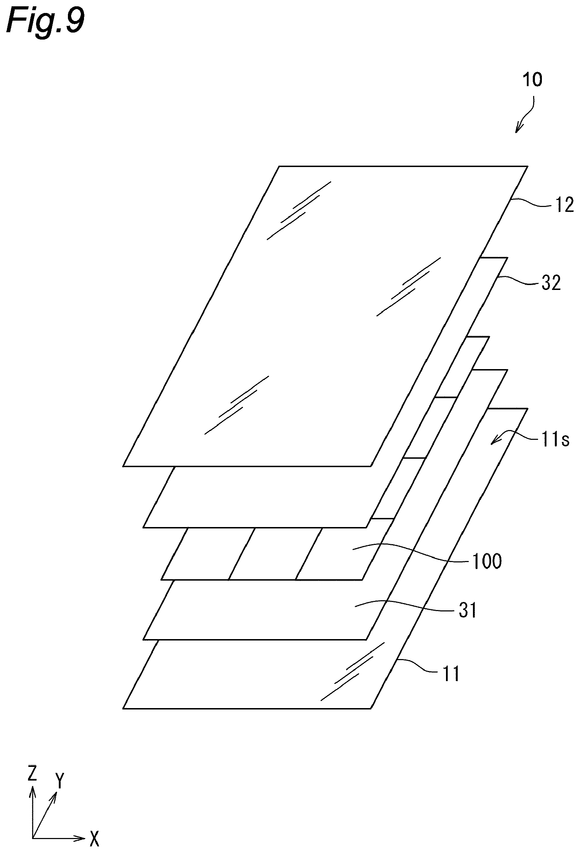

Referring next to Figs. 7 to 9, the basic configuration of the solar cell module 10 will be described. Fig. 7 is a schematic front view of the solar cell module 10. Fig. 8 is a schematic cross-sectional view of the solar cell module of Fig. 7 taken along line II-II. Fig. 9 is a schematic exploded perspective view of the solar cell module 10 of Fig. 7.

As shown in Figs. 7 to 9, the solar cell module 10 comprises a first substrate 11, a second substrate 12, a plurality of submodules 100 corresponding to solar cell element portions, a first filler 31, and a second filler 32.

The solar cell module 10 can be used, for example, as a building material for a window, a wall, or a balcony that is arranged in a building so that external light enters from the side of the second substrate 12. In this embodiment, the solar cell module 10 is a building material for a balcony, but it may also be used as a skylight or a canopy.

The Z-direction (also referred to as the "first direction") shown in Figs. 7 to 9 corresponds to the thickness direction of the solar cell module 10. The thickness direction of the solar cell module 10 is, for example, the stacking direction of the two substrates 11 and 12, or the stacking direction of the photovoltaic layers included in the solar cell module 10. In addition, directions that intersect with each other (here, perpendicular) in a plane perpendicular to the Z-direction are defined as the X-direction and the Y-direction. The Y-direction may be, for example, the height direction of a window, and the X-direction may be, for example, the width direction of the window.

The first substrate 11 and the second substrate 12 have light-transmitting properties. "Light-transmitting properties" mean transmissivity for visible light. The first substrate 11 and the second substrate 12 are, for example, rectangular glass substrates (tempered glass substrates) used for building materials, and have a thickness of, for example, 2 mm or more. As shown in Fig. 7, in a top view of the solar cell module 10 or a portion thereof, the second substrate 12 may be omitted for clarity.

As shown in Fig. 8, the first substrate 11 and the second substrate 12 are disposed so as to face each other in the Z-direction. The second substrate 12, which is the light receiving side, may be thinner than the first substrate 11. The peripheral edges of the first substrate 11 and the second substrate 12 are sealed by a sealing material 50. In a plan view seen from the Z-direction, the sealing material 50 is located outward from a central region 13 in which the submodules 100 are arranged. The sealing material 50 can be made of a thermoplastic elastomer such as butyl rubber.

Each of the plural submodules 100 is a solar cell submodule having a solar cell (power-generating section). The plural submodules 100 are located between the first substrate 11 and the second substrate 12. Each submodule 100 has, for example, a rectangular planar shape. In the example shown in Fig. 7, the submodules 100 are arranged in a space surrounded by the first substrate 11, the second substrate 12, and the sealing material 50. The plural submodules 100 are disposed in the central region 13 of the first substrate 11 so as not to overlap each other in plan view seen from the Z-direction.

As shown in Fig. 8, the first filler 31 is located between the first substrate 11 and the upper surface of each submodule 100. The second filler 32 is located between the second substrate 12 and the lower surface of each submodule 100. These fillers 31, 32 may be, for example, polyvinyl butyral (PVB), ethylene vinyl acetate copolymer (EVA), polyolefin (PO), or the like.

The fillers 31, 32 may fill the space surrounded by the first substrate 11, the second substrate 12, and the sealing material 50. This can suppress the influence of air on the photovoltaic layer in the submodule 100. Note that an air layer may be formed in a portion of the space other than the portion in contact with the solar cell module. In this example, the fillers 31, 32 are arranged above and below the submodule 100, but they may be arranged on only one side.

In this embodiment, the submodules 100 are arranged in a matrix in two directions (here, the X-direction and the Y-direction) that intersect (here, are orthogonal) with each other in plan view seen from the Z-direction. Columns Ra to Rd, each consisting of a plurality of submodules arranged in the X-direction, are called "module columns." Rows R1 to R4, each consisting of a plurality of submodules arranged in the Y-direction, are called "module rows."

In the example shown in Fig. 7, 12 submodules 100 are arranged in four rows and three columns, constituting four module rows R1 to R4 and three module columns Ra to Rc. The plural (four in this example) submodules constituting each module column Ra to Rc are connected in parallel. The three module columns Ra to Rc are connected in series in the X-direction.

As shown in Fig. 7, the solar cell module 10 further includes first wires 41a to 41c and second wires 42a to 42c extending in the Y-direction between the first substrate 11 and the second substrate 12, and a plurality of third wires 43 for connecting adjacent first wire and second wire. These wires may be metal wires. In this embodiment, these wires are wires (tab wires) made of copper wires coated with solder.

The first wire 41a and the second wire 42a connect the plural (four in this example) submodules 100 that make up the module column Ra in parallel. Similarly, the first wires 41b, 41c and the second wires 42b, 42c connect the plural submodules 100 that make up the module columns Rb, Rc in parallel. In the example shown, the first wires 41a to 41c are arranged at one end of each of the module columns Ra to Rc in the X-direction. The second wires (e.g., tab wires) 42a to 42c are disposed at the other end of each of the module columns Ra to Rc in the X-direction.

The plurality of third wires 43 connects two adjacent module columns in series among the three module columns Ra to Rc. The third wires 43 are arranged so as to connect the first wire of one of the two adjacent module columns to the second wire of the other module column.

As shown in Fig. 7, the solar cell module 10 further includes the pair of lead wires 21, 22. The lead wires 21, 22 are, for example, metal wires (e.g., tab wires). The lead wires 21, 22 are electrically connected to the submodules 100 within a space surrounded by the first substrate 11, the second substrate 12, and the sealing material 50. The lead wires 21, 22 may be drawn from within the space to the outside, passing through the sealing material 50.

In the example shown in Fig. 7, the lead wire 21 is electrically connected to one end of the first wire 41a of the leftmost module column Ra. The lead wire 22 is electrically connected to one end of the second wire 42c of the rightmost module column Rc. The lead wire 21 may be an extended portion of the first wire 41a, and the lead wire 22 may be an extended portion of the second wire 42c.

### [3. Structure of Submodule 100]

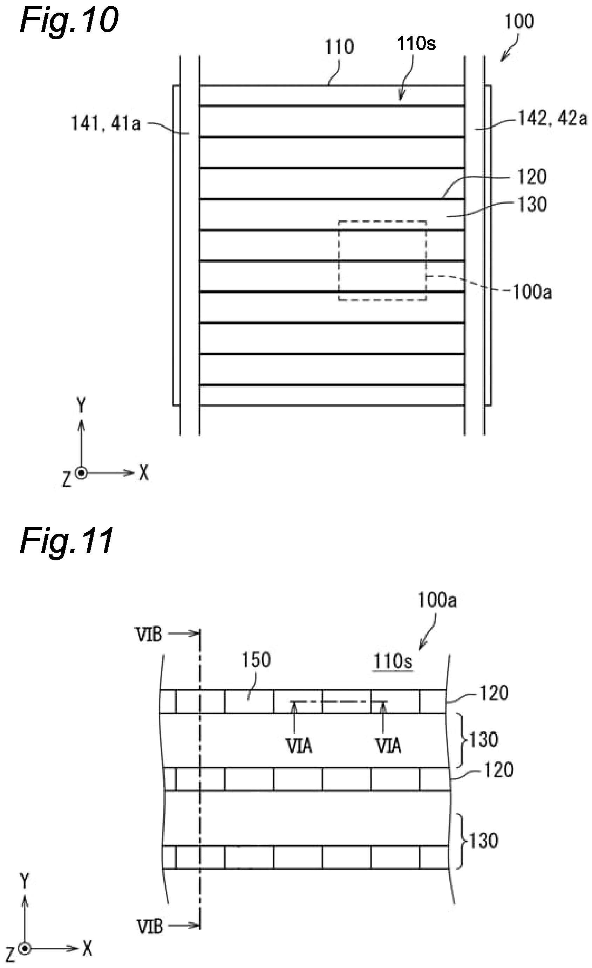

Referring to Figs. 10 to 13, the structure of the submodule 100 in the solar cell module 10 will be described. Here, one submodule in the module column Ra (Fig. 7) will be described as an example.

Fig. 10 is a schematic top view of one submodule in a solar cell module. Fig. 11 is an enlarged top view of a portion of the submodule in Fig. 10. Fig. 11 shows an enlarged view of region 100a shown in Fig. 10. Fig. 12 is an enlarged cross-sectional view taken along line VIA-VIA in Fig. 11. Fig. 13 is an enlarged cross-sectional view taken along line VIB-VIB in Fig. 11.

As shown in Fig. 10, each submodule 100 includes a base substrate 110 having light-transmitting properties a power-generating section supported by the base substrate 110, and a pair of wires 141 and 142. In the example shown in Fig. 10, the power-generating section includes a plurality of linear strings 120.

The base substrate 110 is, for example, a rectangular glass substrate. The power generating section is located on a part of the main surface 110s of the base substrate 110.

The power-generating section includes at least a photovoltaic layer. As described below, the power-generating section has a stacked structure including at least a pair of transparent electrodes and a photovoltaic layer located between the pair of transparent electrodes. The stacked structure only needs to be supported by the main surface 110s of the base substrate 110, and does not need to be in direct contact with the main surface 110s.

The wire 141 is arranged on one end side of the base substrate 110. The wire 142 is arranged on the other end side of the base substrate 110. In this example, the wires 141 and 142 are arranged at both ends of the base substrate 110 in the X-direction. The wires 141 and 142 are electrically connected to the power-generating section. The wires 141 and 142 are connected to the wires 141 and 142 of other submodules (not shown) adjacent in the Y-direction, respectively, to form the first wire 41a and the second wire 42a.

The plurality of strings 120, which are power-generating sections, are connected in parallel by the wires 141, 142. Here, each string 120 extends in the X-direction from one end to the other end of the base substrate 110. One end of each string 120 is connected to the wire 141, and the other end is connected to the wire 142.

The plural strings 120 are arranged on the main surface 110s of the base substrate 110 at a distance from each other in the Y-direction. In a plan view seen from the Z-direction, the plural strings 120 may extend, for example, parallel to each other. In a plan view seen from the Z-direction, regions 130 of the main surface 110s of the base substrate 110 located between adjacent strings 120 are referred to as "inter-string regions."

As shown in Figs. 11 and 12, each of the plurality of strings 120 is a solar cell element string having a plurality of solar cell elements 150 connected in series.

As shown in Figs. 12 and 13, each string 120 has a stacked structure L in which plural layers, including a lower transparent conductive layer LE, a photovoltaic layer PV, and an upper transparent conductive layer UE, are stacked in the Z-direction. These layers are supported by the main surface 110s. In the stacked structure L, the photovoltaic layer PV is located between the lower transparent conductive layer LE and the upper transparent conductive layer UE. The lower transparent conductive layer LE is located on the base substrate 110 side of the photovoltaic layer PV. The photovoltaic layer PV is a thin-film type, and is, for example, a laminated film including, from the base substrate 110 side, an n-type semiconductor layer, an i-type semiconductor layer, and a p-type semiconductor layer. The photovoltaic layer PV may further include an electron transport layer and/or a hole transport layer, as necessary.

The lower transparent conductive layer LE, photovoltaic layer PV, and upper transparent conductive layer UE are separated for each solar cell element 150. In this example, the photovoltaic layer PV and the upper transparent conductive layer UE are separated for each solar cell element 150 by a separation groove 160. The lower transparent conductive layer LE includes a lower transparent electrode 151 of each solar cell element 150. The upper transparent conductive layer UE includes an upper transparent electrode 155 of each solar cell element 150. The photovoltaic layer PV includes a semiconductor layer 153 of each solar cell element 150.

Each solar cell element 150 has the lower transparent electrode 151, the upper transparent electrode 155, and the semiconductor layer 153 located between the lower transparent electrode 151 and the upper transparent electrode 155. The lower transparent electrode 151 (or the upper transparent electrode 155) of the solar cell element 150 located at one end of each string 120 is electrically connected to the wire 141. Similarly, the upper transparent electrode 155 (or the lower transparent electrode 151) of the solar cell element 150 located at the other end of each string 120 is electrically connected to the wire 142.

The photovoltaic layer PV (i.e., the semiconductor layer 153) is a layer (photoelectric conversion layer) that converts absorbed light into electricity. The photovoltaic layer PV includes, for example, a perovskite compound (perovskite semiconductor) as a photoelectric conversion material. The perovskite compound is a perovskite crystal structure represented by the chemical formula ABX₃ or a structure having a crystal similar thereto. A is a monovalent cation, B is a divalent cation, and X is a halogen anion. The lower transparent conductive layer LE and the upper transparent conductive layer UE are, for example, light-transmitting metal oxide layers such as indium tin oxide (ITO), indium zinc oxide (IZO), or fluorine-doped tin oxide (FTO) layers. Note that the materials of each layer constituting the solar cell element are not limited to those described above, and known materials may be used.

### [4. Connection to Bus Wires]

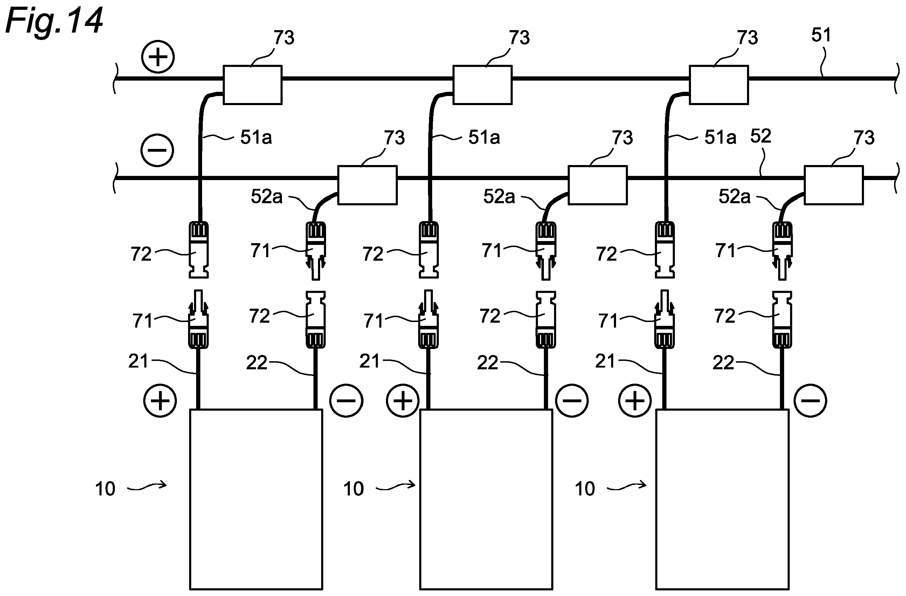

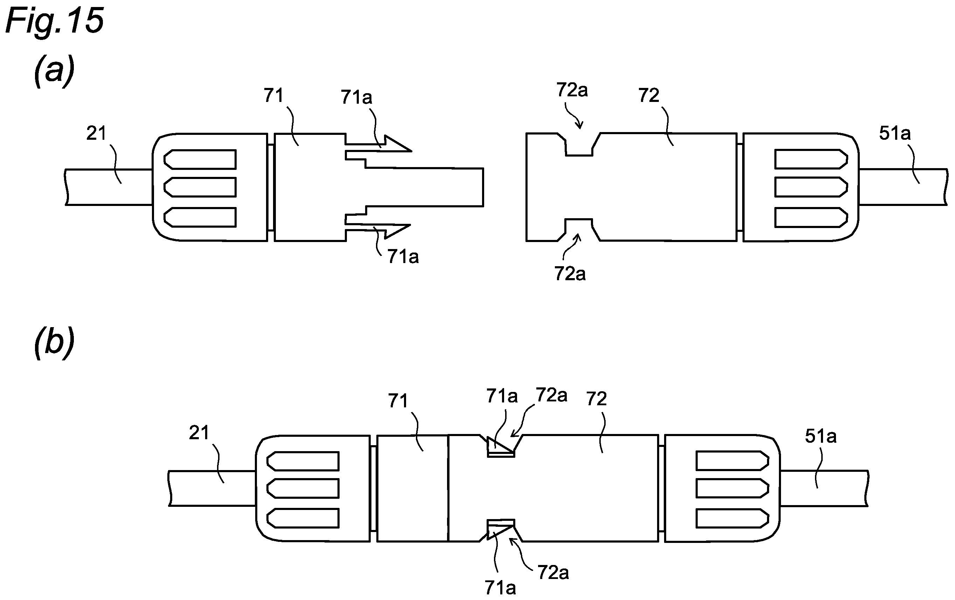

Next, the connection between the lead wires 21, 22 of the solar cell module 10 and the bus wires 51, 52 will be described with reference to Figs. 14 and 15. Fig. 14 is an explanatory diagram illustrating the connection between the bus wires 51, 52 and the lead wires 21, 22 of the solar cell module 10. Fig. 15 is an explanatory diagram illustrating the attachment and detachment of connectors. Fig. 15 (a) shows a state in which a male connector 71 and a female connector 72 are detached. Fig. 15 (b) shows a state in which the male connector 71 and the female connector 72 are connected.

Different types of connectors are connected to the positive lead wire 21 and the negative lead wire 22 of the solar cell module 10. For example, the male connector 71 is connected to the tip of the lead wire 21, and the female connector 72 is connected to the tip of the lead wire 22.

The bus wires 51, 52 are provided with terminal boxes 73 from which lead wires 51a, 52a branch off, respectively. Different types of connectors are connected to the lead wire 51a branching off from the positive bus wire 51 and the lead wire 52a branching off from the negative bus wire 52. For example, the female connector 72 is connected to the tip of the lead wire 51a, and the male connector 71 is connected to the tip of the lead wire 52a.

In this way, since the types of connectors connected to the positive lead wire and the negative lead wire are different, it is possible to prevent the positive and negative wires from being connected incorrectly when connecting to the bus wire 51, 52 when mounting or replacing the solar cell module 10.

The male connector 71 has, for example, two claws 71a at its tip, and the female connector 72 has, at its tip, recesses 72a that can engage with the claws 71a. The male connector 71 can be connected to the female connector 72 by fitting the claws 71a of the male connector 71 into the recesses 72a of the female connector. The male connector 71 can be removed from the female connector 72 by disengaging the claws 71a of the male connector 71 from the recesses 72a of the female connector. Because the male connector 71 and the female connector 72 can be easily attached and detached, even someone who is not a professional electrician can attach and detach the solar cell module 10 to and from the bus wires 51, 52.

### [5. Method for Mounting and Removing Building-Integrated Solar Cell Module]

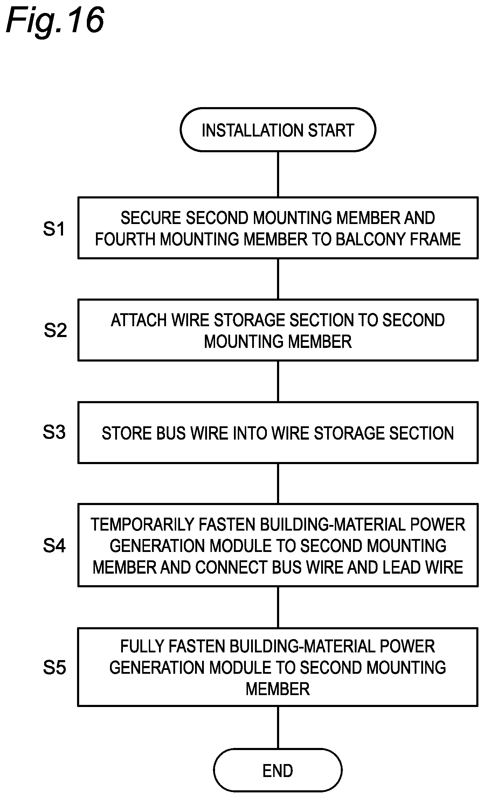

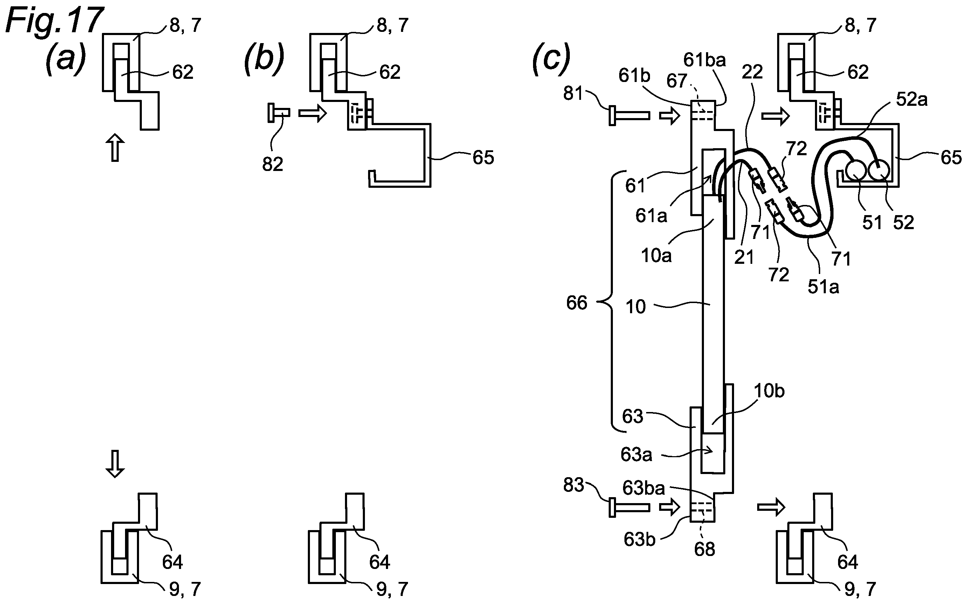

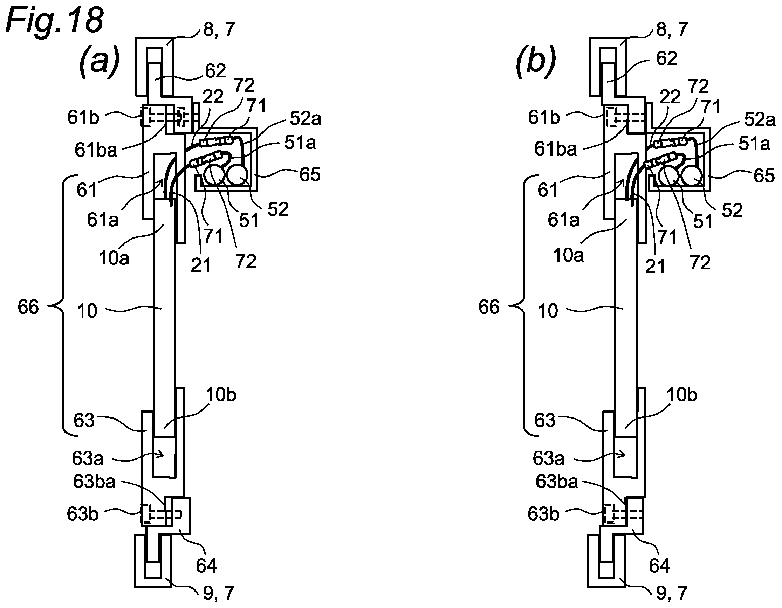

Next, a method for mounting the building-integrated solar cell module of this embodiment will be described with reference to Figs. 16 to 18. Fig. 16 is a flowchart showing the mounting procedure for the building-integrated solar cell module. Figs. 17 and 18 are process diagrams showing the mounting process for the building-integrated solar cell module.

In step S1, as shown in Fig. 17 (a), the worker fixes the second mounting member 62 to the upper frame 8 of the balcony frame 7, and fixes the fourth mounting member 64 to the lower frame 9 of the balcony frame 7. Once the second mounting member 62 and the fourth mounting member 64 are fixed to the balcony frame 7, they can be used intactly at the next time the building-material power generation module 66 is replaced.

In step S2, as shown in Fig. 17 (b), the worker attaches the wire storage section 65 to the second mounting member 62 using the fastening members 82. At this time, the worker can attach the wire storage section 65 from the balcony 4 side, which improves the safety of the attachment. In this embodiment, the worker secures the wire storage section 65 by tightening screws from the balcony 4 side.

In step S3, as shown in Fig. 17 (c), the worker stores the bus wires 51, 52 in the wire storage section 65. Once the bus wires 51, 52 are stored in the wire storage section 65, they can be used as they are the next time the building-material power generation module 66 is replaced.

In step S4, as shown in Fig. 18 (a), the worker temporarily fastens the fastening members 81, 83 to temporarily fix the building-material power generation module 66 to the second mounting member 62, and connects the bus wires 51, 52 to the lead wires 21, 22, respectively.

In step S5, as shown in Fig. 18 (b), the worker fully fastens the building-material power generation module 66 to the second mounting member 62 by fully tightening the fastening members 81, 83. This completes the mounting of the building-integrated solar cell module 2. Note that step S5 may be performed first, and then the bus wires 51, 52 and the lead wires 21, 22 may be connected, respectively, in step S4.

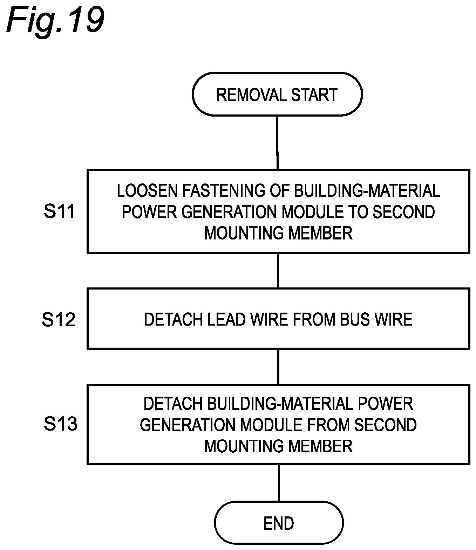

Next, a method for removing the solar cell module of this embodiment will be described with reference to Fig. 19. The procedure of the removal method is basically the reverse of that of the above-described mounting method.

In step S11, as shown in Fig. 18 (a), the worker loosens the screw fastening members 81, 83 to loosen the fastening of the building-material power generation module 66 to the second mounting member 62.

In step S12, the worker removes the lead wires 21, 22 from the bus wires 51, 52.

In step S13, as shown in Fig. 17 (c), the worker completely removes the screw fastening members 81, 83 to remove the building-material power generation module 66 from the second mounting member 62. Next, by mounting a new building-material power generation module 66, it is possible to easily replace only the solar cell module 10 without replacing the balcony frame 7, the second mounting member 62, the fourth mounting member 64, and the bus wires 51, 52.

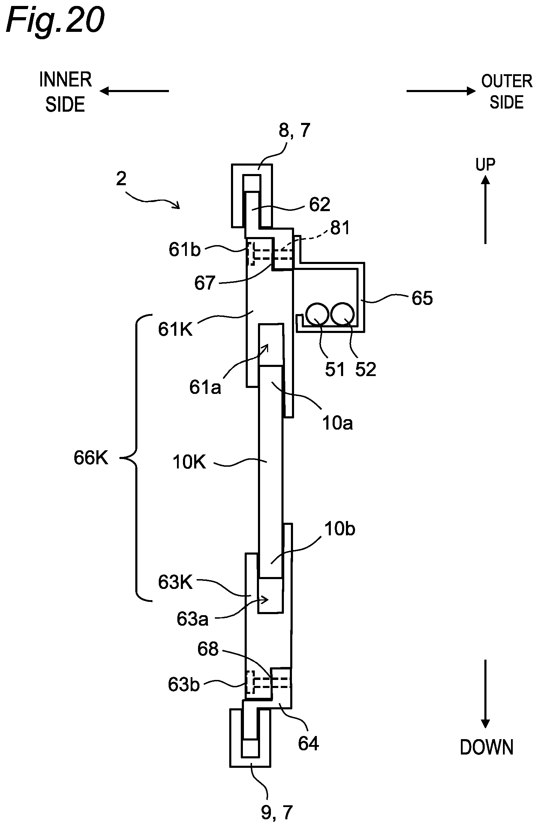

Furthermore, according to this embodiment, even if the size of the solar cell module 10 has manufacturing errors, the difference in size can be accommodated when mounting it to the first mounting member 61 and the third mounting member 63. Furthermore, if the sizes of the solar cell modules 10 differ greatly, they can be adapted to the same size of balcony frame 7 by using the first mounting member 61 and the third mounting members 63 of different sizes, as shown in Fig. 20.

A solar cell module 10K shown in Fig. 20 has a smaller vertical size than the solar cell module 10 shown in Fig. 5, but by using a first mounting member 61K and a third mounting member 63K which have a larger vertical size, a building-material power generation module 66K can be attached to the same second mounting member 62 and fourth mounting member 64.

### [6. Effects, etc.]

In this way, the building-integrated solar cell module 2 comprises the solar cell module 10 having photovoltaic layers disposed on the first substrate 11 and the second substrate 12, the first mounting member 61 attached to one end of the solar cell module 10, the second mounting member 62 attached to one side of the balcony frame 7, and the wire storage section 65 removably attachable to the second mounting member 62 and extends along the balcony frame 7. The first mounting member 61 and the second mounting member 62 are detachably coupled to each other.

By mounting the detachable first mounting member 61 to the solar cell module 10 and the second mounting member 62 attached to the balcony frame 7, which is a building-material frame, the solar cell module 10, which also functions as a building material, can be easily attached to and detached from the balcony frame 7. Even if the replacement cycle of the solar cell module 10 is shorter than the useful life of the building-material frame, the solar cell module 10 can be easily attached and detached, making it easy to replace the solar cell module 10.

Since the solar cell module 10 can be easily replaced on the balcony frame 7, a photovoltaic layer PV with high power generation efficiency can always be mounted. Also, by replacing the solar cell module 10, the exterior design of the balcony wall 5 can be freely changed.

### (Other embodiments)

As described above, the above embodiment has been described as an example of the technology disclosed in the present application. However, the technology in the present disclosure is not limited thereto, and can be applied to embodiments in which appropriate modifications, substitutions, additions, omissions, etc. are made. Therefore, other embodiments will be described below as examples.

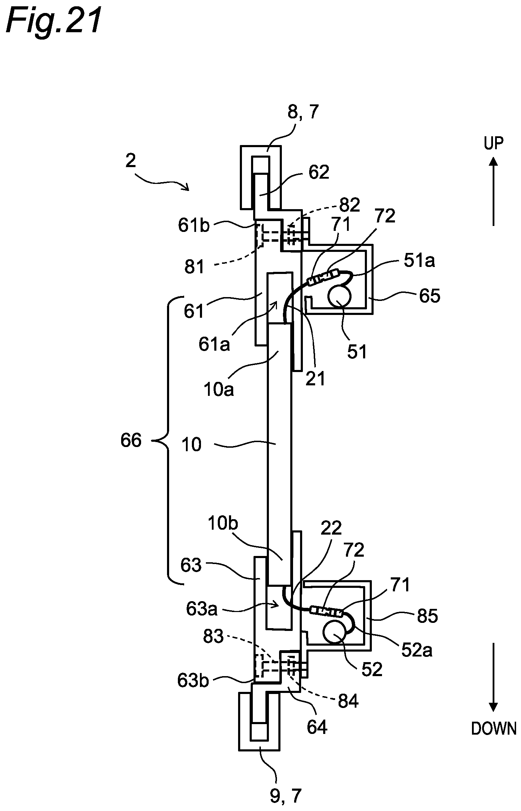

In the above embodiment, both the bus wires 51, 52 are stored in the wire storage section 65 attached to the second mounting member 62, but this is not limiting. As shown in Fig. 21, the positive bus wire 51 may be stored in the wire storage section 65 attached to the second mounting member 62, and the negative bus wire 51 may be stored in a wire storage section 85 attached to the fourth mounting member 64. In this case, the lead wire 21 extends from the top of the solar cell module 10, and the lead wire 22 extends from the bottom of the solar cell module 10. This prevents a worker from mistakenly connecting the positive and negative wires when connecting the bus wire and the lead wires.

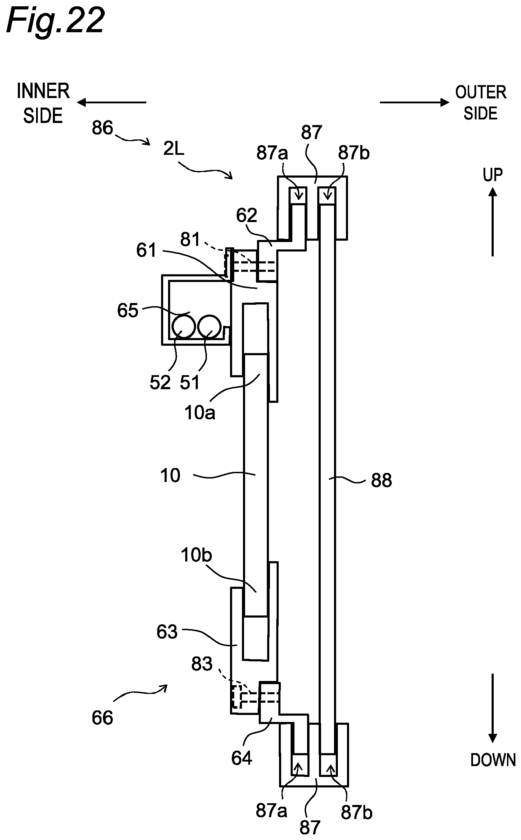

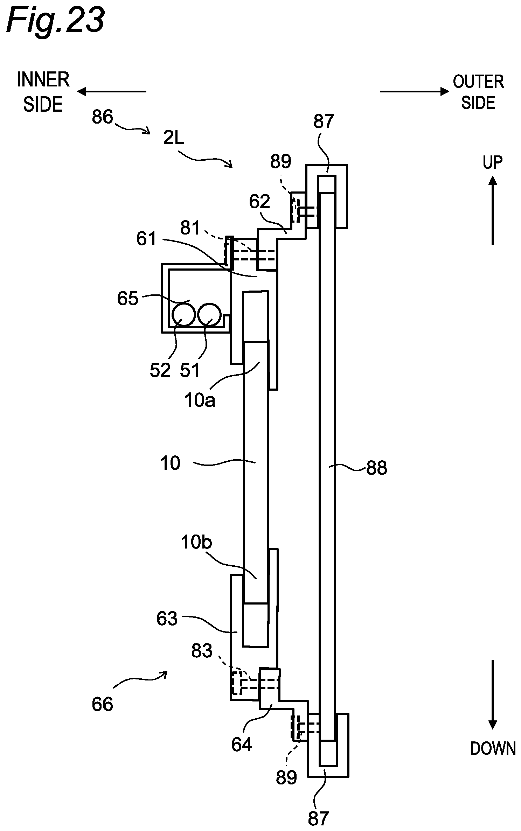

In the above embodiment, the building-integrated solar cell module 2 was the balcony wall 5 of the balcony 4, but this is not limited thereto. As shown in Fig. 22, a building-integrated solar cell module 2L may be a window 86. For example, the inner window of a double-glazed window 86 may be the building-integrated solar cell module 2L. A window frame 87 has two recesses 87a, 87b in the depth direction, and the second mounting member 62 and the fourth mounting member 64 are fixed to the inner recess 87a. The building-material power generation module 66 is attached to the second mounting member 62 and the fourth mounting member 64. A glass plate 88 serving as a window is fixed to the recess 87b at the rear of the window frame 87. Note that the window 86 may be a single window. As shown in Fig. 23, the second mounting member 62 and the fourth mounting member 64 can be directly attached to the inner side of the window frame 87 with fastening members 89 to convert the single window into a double-glazed window.

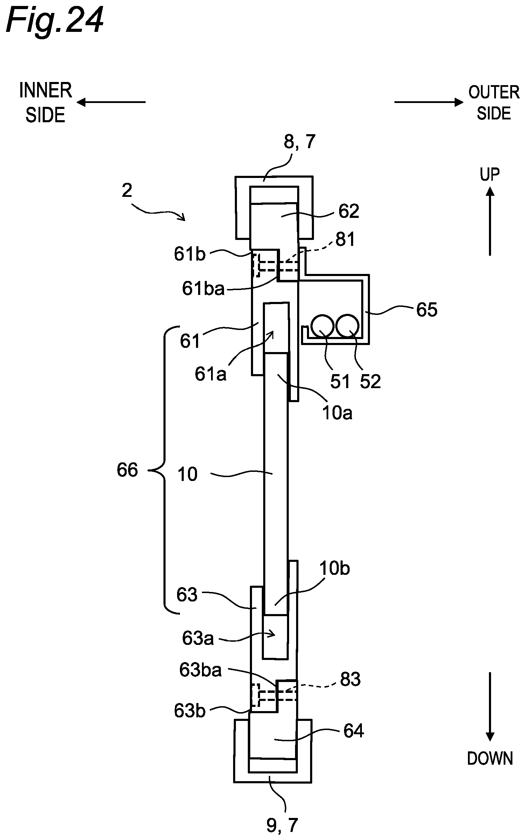

In the above embodiment, the solar cell module 10 is located inside the balcony frame 7, but this is not limited thereto. As shown in Fig. 24, the solar cell module 10 may be positioned directly below the upper frame 8 of the balcony frame 7.

In the above embodiment, the photovoltaic layer PV (see Fig. 12) of the solar cell module 10 contains a perovskite compound, but this is not limitative. The solar cell module 10 may contain a silicon-type photovoltaic layer.

In the above embodiment, the wire storage section 65 is disposed outside the second mounting member 62, but this is not limiting. The wire storage section 65 may be disposed inside the second mounting member 62.

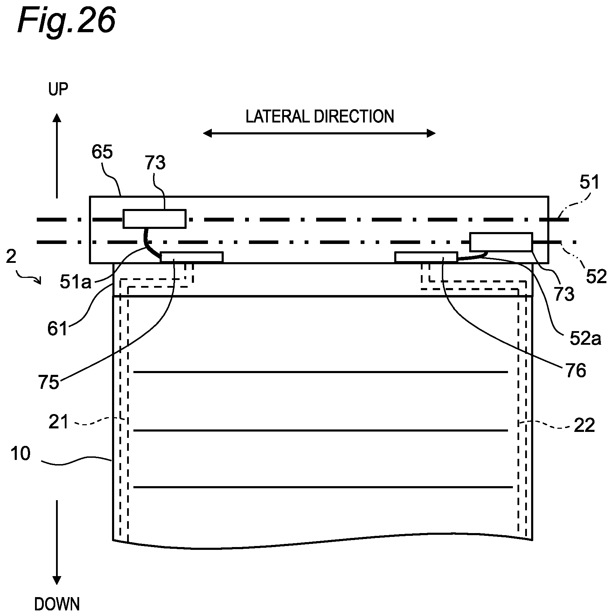

In the above embodiment, the bus wires 51, 52 and the lead wires 21, 22 of the solar cell module 10 are connected via the male connector 71 and the female connector 72, but this is not limited thereto. As shown in Fig. 26, the lead wire 21 of the solar cell module 10 may be connected to a terminal box 75, and the lead wire 22 may be connected to a terminal box 76. The terminal boxes 75, 76 are each disposed at the upper end of the solar cell module 10, and an opening or cutout is formed in the location of the corresponding wire storage section 65, and the terminal boxes 75, 76 are stored in the wire storage section 65. In the wire storage section 65, the lead wire 51a branching off from the positive bus wire 51 is connected to the terminal box 75, and the lead wire 52a branching off from the negative bus wire 52 is connected to the terminal box 76.

### (Summary of Embodiments)

(1) A method for mounting a solar cell module of the present disclosure is a solar cell module mounting method for mounting on a vertical building-material frame a solar cell module having a photovoltaic layer containing a perovskite compound disposed on a substrate. With the solar cell module having a first mounting member attached to at least one of upper and lower ends of the solar cell module, a second mounting member is attached to at least one of upper and lower portions of the building-material frame. A wire storage section is attached to the second mounting member. The first mounting member is coupled to the second mounting member, and, within the wire storage section, a first lead wire of the solar cell module is connected to a first main wire, and a second lead wire of the solar cell module is connected to a second main wire.
(2) In the method for mounting a solar cell module of (1), the building-material frame has an inclination ranging from 0 degrees to 40 degrees, both inclusive, with respect to the vertical direction.
(3) In the method for mounting a solar cell module of (1) or (2), the solar cell module has a solar cell element portion functioning as a solar cell, and a first mounting portion located in a region other than the solar cell element portion. The second mounting member is connected to the first mounting portion.
(4) In the method for mounting a solar cell module of (3), a space is defined between the solar cell module and the first mounting portion, the first lead wire and the second lead wire being arranged in the space.
(5) In the method for mounting a solar cell module of (4), the wire storage section protrudes outward or inward from the first and second mounting members, and the wire storage section has a space therein along the width direction of the first mounting member, and stores the first main wire and the second main wire in the space.
(6) In the method for mounting a solar cell module of any one of (1) to (5), the wire storage section stores a first coupling portion that couples the first lead wire of the solar cell module to the first main wire, and a second coupling portion that couples the second lead wire of the solar cell module to the second main wire.
(7) A method for removing a solar cell module of the present disclosure is a method for removing a solar cell module having a photovoltaic layer containing a perovskite compound disposed on a substrate. The solar cell module has a first mounting member attached to one end of the solar cell module, with a second mounting member being attached to an upper or lower portion of a building-material frame, and with a wire storage section and the first mounting member being attached to the second mounting member. Within the wire storage section, a first lead wire of the solar cell module is disconnected from a first main wire, and a second lead wire of the solar cell module is disconnected from a second main wire. The first mounting member is then detached from the second mounting member.
(8) A building-integrated solar cell module of the present disclosure comprises: a solar cell module having a photovoltaic layer containing a perovskite compound disposed on a substrate; a first mounting member attached to one end of the solar cell module; a second mounting member attached to an upper or lower portion of a building-material frame; and a wire storage section removably attachable to the second mounting member and extending along the first mounting member, wherein the first mounting member and the second mounting member are detachably coupled to each other.
(9) In the building-integrated solar cell module of (8), the first mounting member has a recess, the recess capturing one end of the solar cell module.
(10) In the building-integrated solar cell module of (8) or (9), the second mounting member comprises a first end inserted into and fixed to one recess of the building-material frame, and a first fixing portion detachably fixed to the first mounting member.
(11) In the building-integrated solar cell module of any one of (8) to (10), the building-integrated solar cell module comprises: a third mounting member attached to the other end of the solar cell module; and a fourth mounting member attached to the other side of the building-material frame, wherein the third mounting member and the fourth mounting member are detachably coupled to each other.
(12) In the building-integrated solar cell module of (11), the third mounting member has a recess, the recess capturing the other end of the solar cell module.
(13) In the building-integrated solar cell module of (11) or (12), the fourth mounting member comprises a second end inserted into and fixed to the other recess of the building-material frame, and a second fixing portion detachably fixed to the third mounting member.
(14) In the building-integrated solar cell module of any one of (8) to (13), the solar cell module comprises: a first lead wire detachably connected via a connector to a first main wire connected to a positive electrode; and a second lead wire detachably connected via a connector to a second main wire connected to a negative electrode. The wire storage section stores the first and second main wires and the connector.
(15) In the building-integrated solar cell module of any one of (8) to (10), the building-integrated solar cell module comprises: a third mounting member attached to the other end of the solar cell module; a fourth mounting member attached to the other side of the building-material frame; and another wire storage section removably attachable to the second mounting member and extending along the building-material frame. The third mounting member and the fourth mounting member are detachably coupled to each other. A first main wire connected to a positive electrode and a second main wire connected to a negative electrode are separately arranged in wire storage sections attached to a second mounting portion and a fourth mounting portion, respectively.
(16) In the building-integrated solar cell module of any one of (8) to (15), the building-material frame is a window frame or a balcony frame.
(17) A photovoltaic power generation system of the present disclosure comprises: the building-integrated solar cell module of any one of (8) to (16); a first main wire connected to a positive electrode; and a second main wire connected to a negative electrode. The solar cell module comprises: a first lead wire connected to the first main wire via a connector; and a second lead wire connected to the second main wire via a connector. A plurality of the solar cell modules are connected in parallel to the first and second main wires.
(18) In the method for mounting a solar cell module of (1), the building-material frame is a window frame or a balcony frame, and the wire storage section is attached to the second mounting member from the inside of the window or balcony, the first mounting member being attached to the second mounting member from the inside of the window or balcony.
(19) In the method for removing a solar cell module of (2), the building-material frame is a window frame or a balcony frame, and the first mounting member is detached from the second mounting member from inside the window or balcony.

### INDUSTRIAL APPLICABILITY

The present disclosure is applicable to buildings having glass sheet building materials.

### REFERENCE SIGNS LIST

1 photovoltaic power generation system
2 building-integrated solar cell module
3 building
4 balcony
5 balcony wall
6 exterior wall
7 balcony frame
8 upper frame
8a groove portion
8b flat plate portion
8c flat plate portion
9 lower frame
9a groove portion
9b flat plate portion
9c flat plate portion
10, 10A solar cell module
10a end
10aa first surface
10ab second surface
10b end
10ba first surface
10bb second surface
11 first substrate
11s first surface
12 second substrate
13 central region
21 lead wire
22 lead wire
31 first filler
32 second filler
41a, 41b, 41c first wire
42a, 42b, 42c second wire
43 third wire
50 sealing material
51 bus wire
51a lead wire
52 bus wire
52a lead wire
53 controller
54 storage battery
55 display
56 lighting section
57 driver
61 first mounting member
61a recess
61b protrusion
61ba mounting surface
61c flat plate portion
61d flat plate portion
61e flat plate portion
62 second mounting member
62a first flat plate portion
62b second flat plate portion
62ba inner surface
62bb outer surface
62c third flat plate portion
63 third mounting member
63a recess
63b protrusion
63ba mounting surface
63c flat plate portion
63d flat plate portion
63e flat plate portion
64 fourth mounting member
64a fourth flat plate portion
64b fifth flat plate portion
64c sixth flat plate portion
65 wire storage section
65a mounting plate
66 building-material power generation module
67, 68 threaded hole
71 male connector
71a claw
72 female connector
72a recess
73 terminal box
81, 82, 83 fastening member
85 wire storage section
86 window
87 window frame
87a, 87b recess
88 glass plate
89 fastening member
100 submodule
120 string
150 solar cell element
151 lower transparent electrode
153 semiconductor layer
155 upper transparent electrode
160 separation groove

## Claims

1. A method for mounting a solar cell module onto a vertical building-material frame, the solar cell module having a photovoltaic layer containing a perovskite compound disposed on a substrate, the method comprising:
with the solar cell module having a first mounting member attached to at least one of upper and lower ends of the solar cell module, attaching a second mounting member to at least one of upper and lower portions of the building-material frame;
attaching a wire storage section to the second mounting member; and
coupling the first mounting member to the second mounting member, and, within the wire storage section, connecting a first lead wire of the solar cell module to a first main wire and connecting a second lead wire of the solar cell module to a second main wire.

2. The method for mounting a solar cell module according to claim 1, wherein
the building-material frame has an inclination ranging from 0 degrees to 40 degrees, both inclusive, with respect to the vertical direction.

3. The method for mounting a solar cell module according to claim 1 or 2, wherein
the solar cell module has a solar cell element portion functioning as a solar cell, and a first mounting portion located in a region other than the solar cell element portion, and wherein
the second mounting member is connected to the first mounting portion.

4. The method for mounting a solar cell module according to claim 3, wherein
a space is defined between the solar cell module and the first mounting portion, the first lead wire and the second lead wire being arranged in the space.

5. The method for mounting a solar cell module according to claim 4, wherein
the wire storage section protrudes outward or inward from the first and second mounting members, and wherein
the wire storage section has a space therein along the width direction of the first mounting member, and stores the first main wire and the second main wire in the space.

6. The method for mounting a solar cell module according to any one of claims 1 to 5, wherein
the wire storage section stores a first coupling portion that couples the first lead wire of the solar cell module to the first main wire, and a second coupling portion that couples the second lead wire of the solar cell module to the second main wire.

7. A method for removing a solar cell module having a photovoltaic layer containing a perovskite compound disposed on a substrate, wherein
the solar cell module has a first mounting member attached to one end of the solar cell module, with a second mounting member being attached to an upper or lower portion of a building-material frame, and with a wire storage section and the first mounting member being attached to the second mounting member,
the method comprising:
within the wire storage section, disconnecting a first lead wire of the solar cell module from a first main wire and disconnecting a second lead wire of the solar cell module from a second main wire; and
detaching the first mounting member from the second mounting member.

8. A building-integrated solar cell module comprising:
a solar cell module having a photovoltaic layer containing a perovskite compound disposed on a substrate;
a first mounting member attached to one end of the solar cell module;
a second mounting member attached to an upper or lower portion of a building-material frame; and
a wire storage section removably attachable to the second mounting member and extending along the second mounting member, wherein
the first mounting member and the second mounting member are detachably coupled to each other.

9. The building-integrated solar cell module according to claim 8, wherein
the first mounting member has a recess, the recess capturing one end of the solar cell module.

10. The building-integrated solar cell module according to claim 8 or 9, wherein
the second mounting member comprises a first end inserted into and fixed to one recess of the building-material frame, and a first fixing portion detachably fixed to the first mounting member.

11. The building-integrated solar cell module according to any one of claims 8 to 10, comprising:
a third mounting member attached to the other end of the solar cell module; and
a fourth mounting member attached to the other side of the building-material frame, wherein
the third mounting member and the fourth mounting member are detachably coupled to each other.

12. The building-integrated solar cell module according to claim 11, wherein
the third mounting member has a recess, the recess capturing the other end of the solar cell module.

13. The building-integrated solar cell module according to claim 11 or 12, wherein
the fourth mounting member comprises a second end inserted into and fixed to the other recess of the building-material frame, and a second fixing portion detachably fixed to the third mounting member.

14. The building-integrated solar cell module according to any one of claims 8 to 13, wherein
the solar cell module comprises:
a first lead wire detachably connected via a connector to a first main wire connected to a positive electrode; and
a second lead wire detachably connected via a connector to a second main wire connected to a negative electrode, and wherein
the wire storage section stores the first and second main wires and the connector.

15. The building-integrated solar cell module according to any one of claims 8 to 10, comprising:
a third mounting member attached to the other end of the solar cell module;
a fourth mounting member attached to the other side of the building-material frame; and
another wire storage section removably attachable to the second mounting member and extending along the building-material frame, wherein
the third mounting member and the fourth mounting member are detachably coupled to each other, and wherein
a first main wire connected to a positive electrode and a second main wire connected to a negative electrode are separately arranged in wire storage sections attached to a second mounting portion and a fourth mounting portion, respectively.

16. The building-integrated solar cell module according to any one of claims 8 to 15, wherein
the building-material frame is a window frame or a balcony frame.

17. A photovoltaic power generation system comprising:
a plurality of the building-integrated solar cell modules according to any one of claims 8 to 16;
a first main wire connected to a positive electrode; and
a second main wire connected to a negative electrode, wherein
the solar cell module comprises:
a first lead wire connected to the first main wire via a connector; and
a second lead wire connected to the second main wire via a connector, and wherein
the plurality of solar cell modules are connected in parallel to the first and second main wires.
